# EUROPEAN PATENT APPLICATION

(11) **EP 1 867 493 A1**
(43) Date of publication of application: **19.12.2007**
(21) Application number: 06830908.7
(22) Date of filing: 01.03.2006
(51) Int. Cl.: B44F 1/02

(54) **SYSTEM FOR PRINTING PANELS USING DIGITAL INJECTION MEANS, SAID PANELS HAVING ONE TRANSPARENT FACE AND OPTIONALLY COMPRISING IMAGES OR GRAPHICS ON THE OPPOSING FACE**

(30) Priority: 03.03.2005 ES 200500495
(71) Applicant: Codice Exterior Gestion De Soportes S.L., 29004 Malaga (ES)
(72) Inventor: FERNANDEZ CONESA, Rafael Luis, E-29004 Malaga (ES)
(74) Representative: Pons Arino, Angel
(86) International application number: PCT/ES2006/070022
(87) International publication number: WO 2007/039660

(57) **Abstract**

The invention relates to a system for printing panels using digital injection means, said panels having one transparent face and optionally comprising visible images or graphics on the opposing or opaque face thereof. The invention is of the type that comprises a base of continuous light-permeable material having a discontinuous pattern applied thereto, said pattern being formed by successive stacked layers of ink, usually consisting of a first opaque black layer, a second grey layer(s), a third with layer(s) and successive layers of different colours such as those used in quadrichromy, in which the printing is performed using inks that dry instantly under ultraviolet light, thereby enabling the application of all of the layers in a single sequence by means of printing. The printing environment is also equipped with ultraviolet lamps which perform instant drying as the layers are applied.

## Description

### OBJECT OF THE INVENTION

This invention concerns a system of printing by digital means of injection of panels with vision on one side open to the incorporation on the other side of images or graphics.

### BACKGROUND OF THE INVENTION

For quite a number of years we have known the existence of parasol blinds for motor cars made up of discontinuous (perforated) laminar parts of a dark colour on the side seen in the interior of the car and a light colour or with a light reflection capacity on the opposite side seen from the exterior.

As a rule, these blinds are installed on the inside of the rear window of the car with a view to avoiding the blinding effect of an excess of solar light entering this area. Their action was based on the fact that the light colour on their side oriented towards the exterior reflected the larger part of the incident light, whereas the dark colour of its inward oriented side absorbed the most of the interior light of the vehicle capable of blinding the driver, whilst the orifices or discontinuities allowed the latter to observe the road behind him with a slight sensation of darkening and without any blinding effect.

A similar principle is contained in the English patent GB2165292, where the discontinuous part was made up of a pattern of different printed layers applied directly to a transparent or translucent base or glass, constituting a panel that was to all effects transparent or translucent with a slight darkening on one of its sides and reflective on the other side. In this case, the layers forming the reflective side could incorporate graphics with various impressions of an advertising, informative, etc., nature that would be visible only on the reflective side.

This patent contemplated a large number of variations, among them also the possibility to apply a layer of print equally on the dark side of the discontinuous part, whose impression would be visible to a larger or lesser extent on the transparent or translucent side of the panel.

Likewise, and in order to avoid the retracing on the transparent or translucent side of part of the impression applied to the reflective side, it was possible to intercalate one or more layers of neutral colours to offset this unwanted effect.

Customarily, to print the discontinuous pattern in accordance with the desired pattern (size and location of the discontinuities), the following methods are applied:
Serigraphy: Screen-printing, which presents recording problems, only for more than 1,000 units. In addition, photographic printing provides an image with a very low resolution.
Lithography: presents the same recording problems as serigraphy, although a better resolution but is used only for more than 5,000 units and its ink does not have a long durability outside.
Offset: is used solely for high-volume production (10,000 units), with an excellent resolution and an interesting price. The downside resides in the fact that the ink is suitable only for short-term campaigns and this kind of production volumes finds few askers on the market.
Digital combination: this method consists of the impression of the first two layers, black and white, by means of a coil heat transfer machine. Next, the complete colour image is loaded and printed in another machine and, finally, the undesired ink is removed from the transparent areas using air knives and other cleaning methods. This system is used only for small production volumes, due to its extremely high cost in terms of time and materials.

Consequently, the techniques applied do not allow a versatile and quick printing suitable for any volume of run, since quality techniques such as offset require high-volume runs, whereas other techniques, namely serigraphy and lithography, present problems of quality and durability and the digital combination requires several machining operations and other jobs such as cleaning with air knives, which increase the cost of the production and therefore distort the versatility it offers for other uses.

As regards the use of digital printing, we also know the patent EP0904206 referring to a process and an element to show an image.

This patent discloses the computer manipulation of a design to create unprinted areas on a transparent material.

Furthermore, it discloses digital printing by ink injection for panels with a one-way vision, including the use of inks based on water and solvent inks, identifying in the process the problems of opacity and recording on the colour layers associated with ink injection.

This patent also discloses certain methods to overcome these problems, but fails to contemplate the use of ultraviolet drying inks (hereinafter referred to as UV inks) in digital printing, nor the use of machines equipped to use this kind of inks, not the optimised installation of the heads, nor the use of multiple heads on digital printing machines. Nor does is envisage the use of white UV ink for digital printing by ink injection, nor, above all, the possibility to print in one machine run, a performance that is impossible of difficult to achieve with the method proposed in the said patent. As a result, it is impossible to reach high production speeds, which, on the contrary, would be achieved by printing in one single run.

Consequently, there exist a number of drawbacks in the techniques currently used that do not allow digital printing by injection of a panel with vision on one side only by a method of one single run of the injection printing machine. These drawbacks are overcome by applying the system subject of this invention.

### DESCRIPTION OF THE INVENTION

The system of the invention provides an ideal way to print by digital means of injection of panels with vision on one single side, allowing the incorporation of images and graphics on the opposite side with one single run of the base by means of injection printing.

According to the invention, the system consists of the printing on a base or support allowing the passage of light, either transparent or translucent and either dyed or not dyed, of a discontinuous pattern formed by the application of successive superimposed layers of ink, the first layer being preferably opaque, and on which a second layer of a neutral grey colour is applied, and then applying on the latter successive layers of different colours which will compose an image. These successive layers may be formed, for instance, by means of the colours used in the four-colour printing technique.

The improvement proposed un the invention consists in applying these layers by means of UV inks, incorporating the printing means, that is to say, the injection printer, ultraviolet lamps drying the inks instantly as they are being applied, thus allowing the immediate application of the next layer of ink.

This implementation consisting of the use of UV inks and the use of ultraviolet lamps on the printer makes it possible to print the base in one single run through the printer or the printing means, thus finishing the panel completely and achieving a reduction of the cost and time of the printing process and an increase of the production capacity.

In addition to the main two characteristics of the invention, it is necessary to use a UV ink of a grey colour, which does not exist at present; therefore, the invention also refers to the obtaining of the said ink by mixing black and white UV inks respectively.

### BRIEF DESCRIPTION OF THE DRAWINGS

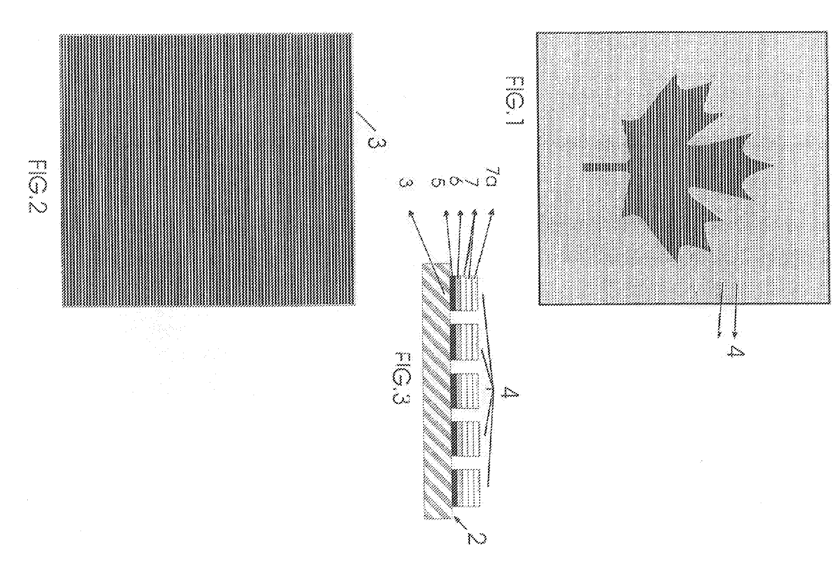

Figure 1 shows an image of the obverse or reflective side of a panel obtained by applying the process of the invention.
Figure 2 shows the back side or transparent side of the part shown in figure 1.
Figure 3 shows a section detail of the panel obtained by applying the system of the invention.
Figure 4 shows an image of the impression of the panel represented in figure 1, according to the system of the invention, by a printing means incorporating two heads.
Figures 5, 6, 7 and 8 show different configurations of the printer head of the injection printing means shown in figure 4.
Figure 9 shows an image of the impression of the panel represented in figure 1, according to the system of the invention, by a printing device incorporating two heads.
Figure 10 shows a configuration of the two injectors of the heads corresponding to the implementation of the heads as shown in figure 9.

### DESCRIPTION OF A PRACTICAL PERFORMANCE OF THE INVENTION

System 1 of the invention consists of the application on one of the sides 2 of a part or base allowing the passage of light, such as a piece of glass, methacrylate or any other transparent or translucent support, of a discontinuous pattern 4 made up of the following layers: one first opaque and dark-coloured, preferably black, layer 5. One second layer 6 of a grey colour, formed by a mixture of black and white inks. And successive layers 7 of various colours, which will be joined to form a colour image, ideally by means of four-colour printing.

Optionally, albeit not shown here, one could also incorporate on the inside of the opaque layer 5, that is to say, between the latter and base 3, one or more layers representing graphics or images, thus obtaining images on both sides.

As a result of this configuration, the panel would show the image formed by layers 7 on one side, and, on the other, would show a transparent or slightly darkened aspect, depending on the size of the discontinuities of the pattern. Additionally, this transparent side would show the image applied, as the case may be, on the inside of the opaque side.

The novelty introduced by the invention consists of the use of inks that dry fast under ultraviolet rays (UV inks) for digital injection printing. This makes it possible to apply all ink layers in one single run of part 3 through the machine or printing device, not represented here.

An essential condition for the system to be operative is the use of white UV ink to obtain direct grey UV ink, which is to constitute the neutral layer 6. This ink will be prepared (mixed) prior to being loaded in the machine.

Consequently, the invention necessarily contemplates the installation on the machine or printing device, preferably on its heads 8, of ultraviolet lamps 9 which will guarantee the immediate drying of the ink as it is being applied, being the reason why an instantaneous application of the successive layers is possible, even by means of injectors assembled on the same head.

In order to achieve this performance, there are several possible methods: either one can take advantage of the distribution of the injectors on the heads of the printing machines such as it is at present, implementing a specific printing control device allowing the application of the layers in their proper order, or one can introduce an optimised distribution of the injectors on the head or heads of the machine for the application of these ink layers in their proper order. Although, in principle, the first solution appears to be the cheapest one to carry out, the second solution would be feasible for machines designed specifically for this type of printing, as their operating speed would be higher.

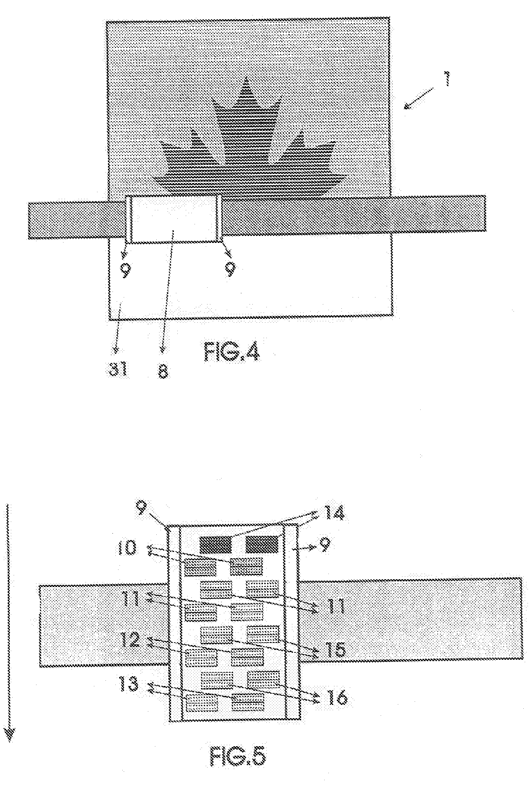

In relation to the second case and by way of non-restricting examples, figures 5,6,7 and 8 show possible configurations of distribution of the injectors on the single head, where the injectors of the various colours correspond to the following numerical references: grey 10, white 11, process magenta 12, process black 13, matt black 14, process blue 15, process yellow 16, and ultraviolet drying varnish 17.

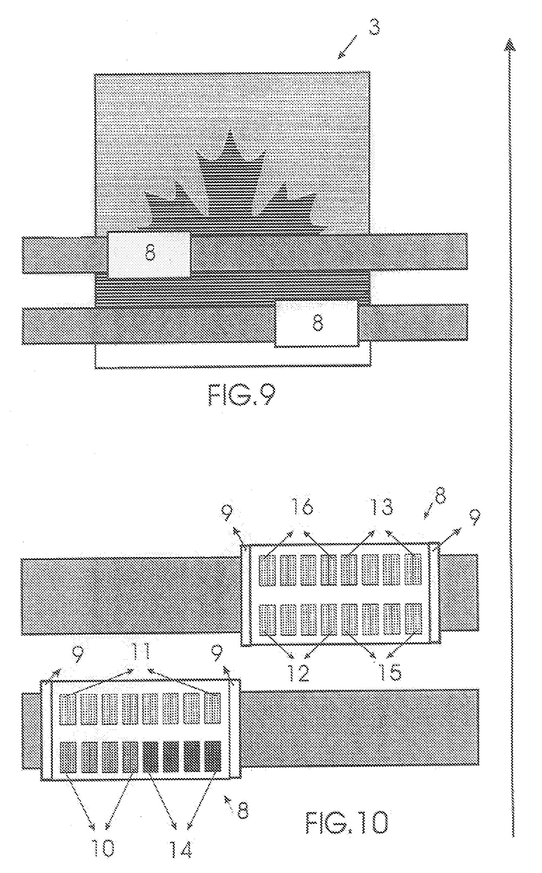

It is also possible to install multiple heads. As only one of several possible examples, a possible configuration is also shown in figures 9 and 10 with a double head and identical colour references.

In figure 5 it can be appreciated that the only head, in the direction of circulation of base 3, places the injectors lengthwise in an arrangement by rows in which, in the first place, a pair of black matt colour injectors is placed, followed by a pair of grey colour injectors, followed in turn by a pair of white colour injectors and then another pair of white colour injectors, followed by a pair of injectors of process blue colour, next a pair of process magenta injectors, and then a pair of process yellow injectors and, finally, a pair of process black injectors; each pair of injectors being slightly displaced in relation to the pair preceding it.

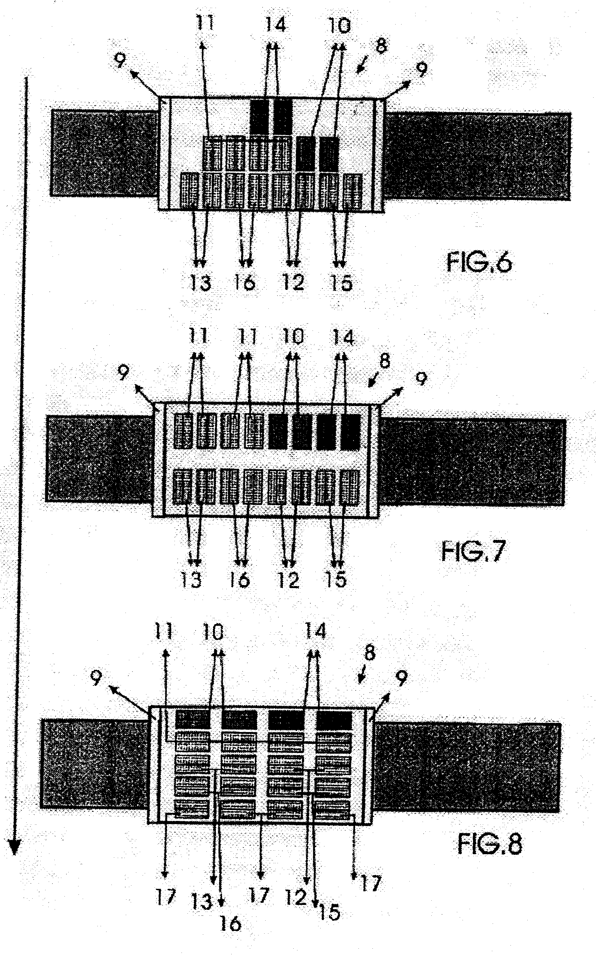

On figure 6 one observes that the head, in the same direction of circulation of the base, arranges the injectors lengthwise in three rows, with the first row being made up of one single pair of matt black colour injectors, a second row in which two pairs of white colour injectors and one pair of grey colour injectors are set up from right to left, and a third row formed, from right to left, by a pair of process black colour injectors, another pair of process yellow injectors, a further pair of process magenta colour injectors and a final pair of process blue injectors.

Figure 7 shows that the head, always in the same direction, arranges the injectors lengthwise in two rows, a first row containing from right to left two pairs of white colour injectors, another pair of grey colour injector and a further pair of matt black colour injectors, and a second row formed by one pair of process black colour injectors, another pair of process yellow colour injectors, followed by a pair of process magenta colour injectors and finally another pair of process blue colour injectors.

In figure 8 one observes that the head, still in the same direction, arranges the injectors in five rows across. In the first row, always in the direction of circulation of the base and from right to left, a pair of grey colour injectors and another pair of matt black colour injectors are installed, the second row is formed of two pairs of white colour injectors, the third row contains a pair of process black colour injectors and another pair of process magenta injectors, in the fourth row a pair of process yellow colour injectors and another pair of process magenta colour injectors are arranged, while the fifth row contains two pairs of ultraviolet varnish injectors.

Figure 10 shows a possible configuration with two heads with, in the direction of circulation of the base and from right to left, a first head with a first row of two pairs of matt black injectors and two pairs of grey injectors and a second row with four pairs of white colour injectors, whereas at the second head a first row of two pair of process blue colour injectors is arranged together with two pair of process magenta injectors, followed by a second row of two pairs of process black colour injectors together with two pairs of process yellow colour injectors.

Now that the nature of the invention and the way to implement it in practice have been sufficiently described, it should be clarified that the arrangements indicated above and represented in the attached drawings may be subject to modifications of details without altering the basic principle.

## Claims

1. a system of printing by digital means of injection of panels with vision on one single side which can incorporate visible images of graphics in its opposite or opaque side; of the type of panels that consist of a part or base of a continuous material allowing the passage of light, on which a discontinuous pattern is applied consisting of successive superimposed layers of ink, with a first opaque and preferably dark layer that can optionally incorporate images or graphics on its side of contact with the substrate, a second layer of grey colour and successive layers of different colours such as, for instance, those used in the four-colour printing technique to compose an image; **characterised by** the fact that the digital impression by injection is performed using inks that dry instantly under ultraviolet light, thus allowing the application of all layers in one single run through the printing device; in combination with the use of these inks, the system includes the implementation in the printing device of ultraviolet lamps achieving their immediate drying as they are being applied.

2. System as in claim 1 **characterised by** the fact that the colour grey is implemented by means of a mixture of white and black inks in instantaneous drying under ultraviolet light.

3. System as in claim 1 **characterised by** the fact that the printing device used consists of a large-format printer on which one of more printing heads are assembled.

4. system as in claim 3 **characterised by** the fact that the large-format printer arranges its injectors on the corresponding heads in the traditional configuration, implementing a controller to optimise and to adapt the performance of the printer to the successive printing of the layers in the established order with one single run of the substrate.

5. System as in claim 1 **characterised by** the fact that the large-format printer implements the injectors in one or more heads in an optimised arrangement for the application and instantaneous drying of the various superimposed layers in their order of application.

6. System as in claim 5 **characterised by** the fact that the injectors are incorporated in one single head in an arrangement consisting of the lengthwise installation of the injectors in an arrangement by rows, in which the first row is formed by one pair of matt black colour injectors, followed by a pair of grey colour injectors, followed by a pair of white colour injectors, followed by another pair of white colour injectors, then a pair of process blue injectors, then a pair of process magenta injectors, followed by a pair of process yellow injectors and, finally, a pair of process black colour injectors, , with each pair of injectors being slightly displaced in relation to the preceding one.

7. System as in claim 5, **characterised by** the fact that the injectors are incorporated in one single head in an arrangement consisting of the lengthwise instalment of the injectors in three rows, with a first row containing one single pair of injectors of matt black colour, a second row with, from right to left, two pairs of white colour injectors and one pair of grey colour injectors, and a third row formed by an arrangement from right to left of one pair of process black injectors, another pair of process yellow injectors, a further pair of process magenta colour injectors and another pair of process blue injectors.

8. System as in claim 5 **characterised by** the fact that the injectors are incorporated to one single head in an arrangement consisting of the lengthwise installation in two rows, with a first row containing, from right to left, two pairs of white colour injectors, another pair of grey colour injectors and another pair of matt black colour injectors, and a second row formed by a pair of process black colour injectors, another pair of process yellow colour injectors, a further pair of process magenta colour injectors and another pair of process blue colour injectors.

9. System as in claim 5, **characterised by** the fact that the injectors are incorporated to one single head in an arrangement consisting of the lengthwise installation of the injectors in five rows, setting up in the direction of circulation of the base and from right to left, in the first row, a pair of grey colour injectors and another pair of matt black colour injectors, in the second row two pairs of white colour injectors, in the third row one pair of process black colour injectors and another pair of process magenta colour injectors, in the fourth row one pair of process yellow injectors and another pair of process magenta injectors and, in the fifth row, two pairs of ultraviolet varnish injectors.

10. System as in claim 5, **characterised by** the fact that the injectors are incorporated to two heads in an arrangement formed, in the direction of circulation of the base and from right to left, by a first head with a first row of two pairs of matt black injectors and two pairs of grey injectors and a second row with four pairs of white colour injectors, whereas, at the second head, an arrangement is formed of a first row of two pairs of process blue colour injectors next to two pairs of process magenta colour injectors, and, in a second row, two pairs of process black colour injectors next to two pairs of process yellow colour injectors.

11. System as in claim 1 **characterised by** the fact that the ultraviolet lamps are assembled preferably on the head or heads of the printing device, accompanying the movement of the latter.
